# EUROPEAN PATENT APPLICATION

(11) **EP 1 229 087 A1**
(43) Date of publication of application: **07.08.2002**
(21) Application number: 02001979.0
(22) Date of filing: 04.02.2002
(51) Int. Cl.: C09D 5/12, C09D 5/10, C23C 22/34, C23C 22/48

(54) **Acidic, water-thinnable anti-rust coating**

(30) Priority: 02.02.2001 WO PCT/IL01/00109
(71) Applicant: Primex-Metal Coatings Ltd., Zemach 15132 (IL)
(72) Inventor: Bortnik, Lev, Nesher 36810 (IL)
(74) Representative: VOSSIUS & PARTNER

(57) **Abstract**

Acidic, water-thinnable composition comprising alkyd resins, iron oxide pigment, metallic zinc or zinc-containing compound and at least one inorganic salt. The composition may be used both as a primer and paint. The composition creates a coating, which is capable of simultaneously acting as a bonding rust, inhibiting and protecting layer.

## Description

This invention relates to rust converting and rust inhibiting coatings.

Many compositions for removal and inhibition of corrosion are known in the literature. Some examples of such compositions are listed below.

US 4,462,829 describes a rust converting and rust inhibiting primer, which comprises an aqueous suspension or aqueous emulsion of alkyd resin, pigments, a drying accelerator and a surfactant, and may be thinned by non-polar solvents such as petroleum spirits.

US 5,312,491 describes rust inhibiting compositions that contain oxime compounds as a rust converter and have improved elasticity.

US 5,476890 describes a water thinnable primer, effectively adherent to rusted metal substrates that has a neutral pH of around 7.

US 4,086,182 describes a rust transforming composition comprising an aqueous dispersion of a synthetic binding agent, a polymeric esterification product and acid anhydrides. Upon application to rusty iron the composition gives deep black lacquer-like corrosion-resistant film.

EP 0 264 471 describes a coating composition applicable to hot metal surfaces between 40 and 250°C, without prior chemical conversion.

The invention provides, according to one of its aspects, an acidic water thinnable composition for rust conversion and corrosion inhibition. The composition may be used as a paint or a primer. The application of the composition of the invention to a rusted surface results in rust conversion and generation of an elastic passivation film, which exhibits strong adhesion to the metal surface.

In this context acidic means having a pH of less than 5, preferably between 2.5 and 3.5. The acidity of the composition of the invention is advantageous since it allows a most efficient rust converting. Thus, the composition of the invention may be used for treating rust layers of more than 20µm thickness, and some compositions according to the invention are suitable for treating rust layers of more than 50µm. As the treated rust layer is thicker a larger number of composition. layers may be required.

The composition according to the invention typically shows very high thermal stability, and deformations are found to occur only around 250°C to 400°C, depending on the specific embodiment. The minimum film forming temperature (MFFT) of compositions according to the invention is typically 5°C and in some embodiments may be as low as 0°C.

Consequently, the composition according to the present invention is applicable at temperatures of 30°C and below, such as room temperature, 5°C and 0°C.

The composition of the invention creates a coating, which is capable of simultaneously acting as bonding, inhibiting and protecting layer. The coating includes the products of the reaction between the coated object (whether rusted or not) and the composition. The coating thus formed is strong and self-curing, and under normal environmental conditions requires no additional protective lacquer paint overcoat and may be used as an uppermost paint layer. Furthermore, the coating may be used as a primer, since it may be easily over-coated with a wide variety of paints in order to manipulate its final color, or in order to provide it with additional protection. Such additional protection may be needed when the coating is used under severely corrosive environmental conditions, for example, when the coated objects are ducts for corrosive chemicals.

According to a further aspect of the invention, the composition of the present invention is used as a primer. The primer is applicable over rusted objects having various degrees of rust ranging up to at least 100 microns, without pre-treating for removing the rust. Cleaning the object from dust and oil before the coating may be carried out by washing with water, seawater, or water containing detergents.

The primer according to the invention may be applied on objects made of steel, iron, cast iron, galvanized iron, aluminum, and the like. The composition of the invention either used as a paint or as a primer, comprises alkyd resins, an acid, iron oxide pigment, and a stabilizer. Typically, the composition according to the invention also comprises additives, fillers, surfactants, thickeners and additional pigments.

The alkyd resin is preferably a water emulsion of acrylic resins, vinyl resins, polymers and mixtures thereof. Its solid content is preferably from 45% to 55%.

The acid is preferably phosphoric acid.

The iron oxide, Fe₂O₃, is at least 2% (w/w) of the composition of the invention, preferably 7%.

Non-limiting examples of stabilizers that may be useful in preparing a composition according to the invention are propanol, propylene glycol, anhydride ions of phosphor and fluorine, and mixtures thereof. Several commercially available stabilizers that were found to be suitable for use according to the present invention are DISPEX™, manufactured by CIBA Speciality Chemicals of Basel, Switzerland, BYK 154, produced by BYK Chemie Gmbh, Wesel, Germany; and WRACLA™, manufactured by the PCI GROUP, USA. As shown below, WRACLA™ is most preferable.

Suitable fillers should be acidic (of pH 5 and below) and may include, but are not restricted to silicon oxide and barium sulfate.

As well known in the art, surfactant compositions may be added to the composition in order to prevent it from creating bubbles, to enhance its flexibility, and the like. Non-limiting examples to these are the commercially available BYK-036, BYK-190, and BYK-380, all manufactured by BYK-Chemie GmbH of Wesel, Germany.

A non-limiting example of a thickener suitable for use in accordance with the present invention is hydroxyethylcellulose.

Additives that may improve the quality of the composition of the present invention are inorganic salts, typically chlorides, phosphates and sulfates of alkali and earth alkaline metals, preferably NaCl, MgCl₂, and MgSO₄. Such additives improve the composition stability under severe humidity conditions. One way to provide such additives to the composition is to replace at least part of the water with seawater.

According to another aspect of the present invention there is provided an object that is coated with a composition according to the invention. Objects that may be coated by the composition of the invention include, but are not restricted to objects made of iron, cast iron, aluminum, steel, galvanized steel or galvanized iron.

According to another aspect of the present invention there is provided a method for protecting an object from corrosion and converting rusty portions thereof into non-corrosive portions, the method comprising coating the object with the composition of the invention.

According to yet another aspect of the present invention there is provided a method for treating a rusty object before painting, the method comprising washing the object with a suitable cleaning solution and coating the washed object with at least one layer of a composition according to the invention. Preferably, the cleaning solution is selected from water, seawater and detergent containing water.

Fig. 1A and its continuation, Fig. 1B, show a table of the test results of 11 panels coated with a composition according to the invention and commercially available primers and paints.

Fig. 2A is a photograph of a rusty panel painted with Amerlock 400 epoxy paint.

Fig. 2B is a photograph of a rust-clean panel painted with Tambour® antirust primer and Amerlock 400 epoxy paint.

Fig. 2C is a photograph of a rusty panel painted with two layers of the primer of the invention and Amerlock 400 epoxy paint.

Fig. 3A is a photograph of a sandblasted panel painted with Nirlat Zinchromate primer and Nirlat Superemail paint.

Fig. 3B is a photograph of a rusty panel painted with two layers of the primer of the invention and Nirlat Supremail paint.

Fig. 4 is a photograph of a rusty panel, the upper portion of which is painted with the primer composition of the invention and Tambour® polyurethane-based paint; the lower portion is untreated.

Fig. 5 is a photograph of a rusty panel coated with three layers of the composition of the invention.

Fig. 6 is a photograph of a rusty panel, the lower portion of which is painted with two layers of the composition of the invention and with BASF's epoxy-based paint; the upper portion is untreated.

Fig. 7 is a photograph of a rusty panel painted with Tambour® antirust and Tambour® Eitan paint.

In order to understand the invention and to see how it may be carried out in practice, some specific embodiments will now be described, by way of non-limiting examples only.

### EXAMPLE 1

A composition was prepared as follows: to 26 parts of phosphoric acid (40% in water) were added 2 parts of zinc molybdenum ortho phosphate hydrate and 1 part of sodium chloride. The rest of the ingredients were added to the solution thus obtained.

0.4 parts of hydroxyethyl cellulose and 0.9 parts of WRACLA™ were mixed with 44 parts of water. To this solution were added 15 parts of zinc aluminum phosphate, 6 parts of barium sulphate and 6 parts of silicon oxide, and the mixture was thoroughly mixed to obtain a dispersion.

A ferrous oxide pigment was prepared by grinding 15 parts of micronized Fe₂O₃ to 6-7 Hegman.

An alkyd resin was prepared from 50 parts vinyl acrylic copolymer (53-55% solids) and 50 parts of acrylic copolymer (46-50% solids) together with BYK 036, BYK 190 and BYK 380.

All the solutions were mixed together and the pH was stabilized at around 3.5.

### EXAMPLES 2-4

The following table summarizes formulations of compositions prepared according to the invention:

**Table 1**

| Parts | Example 1 | Example 2 | Example 3 | Example 4 |
|---|---|---|---|---|
| 2 | Zinc molybdenum orthophosphate hydrate | ZnO | Zn | Zn (2.1 parts) |
| I | NaCl | NaCI | NaCl | - |
| 1 | MgCl₂ | MgSO₄ | MgSO₄ | MgSO₄ |
| 15 | Zinc aluminum polyphosphate hydrate | Zinc molybdenum orthophosphate hydrate | Zinc molybdenum orthophosphate hydrate | Zinc molybdenum orthophosphate hydrate |

All the other ingredients, quantities and methods of preparation are like those given under EXAMPLE 1 above. (Example 1 in the table is a repetition of EXAMPLE 1).

### Testing examples 1-4

Coatings of the above-described compositions were applied to rusted metallic substrate panels by a brush. The coatings were applied in the amount 80-100 g/m² in a crosswise pattern. Two coats were applied with the drying time between each coat of 60 minutes. After that, the coatings were dried for 24 hours. After drying, the panels were placed into a salt spray cabinet with a concentration of 5% NaCl at a cabinet for 300, 500, 1000 and 1500 hours exposure and then tested. The properties tested included a flexibility test in accordance with ASTM D522, an adhesion test and general appearance test in accordance with Israeli Standard SI 785 Part 27. The panels coated by commercially available rust converting coatings were tested as well. The obtained results are summarized in tables 2 and 3 below.

**Table 2**

| Coating | after 100 brs in salt cabinet | | | after 300 hrs. in salt cabinet | | |
|---|---|---|---|---|---|---|
| According to invention | Bend test | Adhesion | Appearance | Bend test | Adhesion | appearance |
| Example 1 | Pass | 0 | Change color | Pass | 2 | No change |
| Example 2 | Pass | 0 | Change color | Pass | 4 | Bubbles |
| Example 3 | Pass | 0 | Change color | Pass | 5 | No change |
| Example 4 | Pass | 0 | Change color | Pass | 0 | No change |
| | | | | | | |
| Conventional | | | | | | |
| | | | | | | |
| | | | | | | Bubbles |
| Granville | | | | | | Bubbles |
| Hammerite | | | | | | |
| T. Metal | | | Bubbles | Failed | 5 | Bubbles |

**Table 3**

| Coating | after 500 hrs in salt cabinet | | | after 1000 hrs. in salt cabinet | | | after 1500 hours in salt cabinet | | |
|---|---|---|---|---|---|---|---|---|---|
| According to invention | Bend test | Adhes. | Appear. | Bend Test | Adb. | Appear. | Bend Test | Adh. | Appear. |
| Example 1 | Pass | 0 | No change | Fail 15mm | 2 | no change | Fail 20mm | 5 | No change |
| Example 2 | Pass | 1 | No change | Fail 25mm | 4 | no change | Fail23mm | 5 | No change |
| Example 3 Example 4 | Pass | 1 | Nochange | Fail20mm | 2 | no change | Good | 5 | No change |
| | Pass | 0 | No change | Fail 12mm | 4 | no change | Fail 17mm | 1 | No change |
| | | | | | | | | | |
| Conventional | | | | | | | | | |
| | | | | | | | | | |
| Granville | | | Bubbles | | | bubbles | | | bubbles |
| Hammerite | | | Cracks | | | bubbles | | | bubbles |
| T. Metal | | | Bubbles | | | bubbles | | | bubbles |

### EXAMPLES 5-8

In table 4 below there are represented experimental results obtained with compositions of Example 2 above, where the stabilizer WRACLA was replaced by other stabilizers. The results are of tests performed as explained above.

**Table 4**

| No. | Stabilizer | Quantity | 100 hr. check out | | | 300 hr. check out | | | 500 hr. check out | | |
|---|---|---|---|---|---|---|---|---|---|---|---|
| | | | 1 | 2 | 3 | 1 | 2 | 3 | 1 | 2 | 3 |
| 5 | BYK154 | 0.1 | Pass | 0 | Cracking no. 8 | Pass | 3 | Cracking no. 4 | - | - | - |
| 6 | Parmetol DF18 | 0.3 | Pass | 2 | Blistering no. 6 | Fail 20 mm | 3 | Rusting, blistering no. 8-1 | - | - | - |
| 7 | Dispex A 40 | 0.4 | Fail 23mm | 3 | Blistering no. 6 | - | - | - | - | - | - |
| 8 | Propanol | 0.3 | Pass | 2 | No bubbles | Pass | 2 | Blistering no. 6 | Pass | 3 | Bubbles No. 4 |
| 1. bend test (ASTM D 522-Flexibility) | | | | | | | | | | | |
| 2. adhesion (ASTM D 3359) | | | | | | | | | | | |
| 3. appearance (ASTMD 714-87,D 610) | | | | | | | | | | | |

### EXAMPLES 9 and 10

The thermal stability of the following compositions was checked and it was found that only at 250°C thermal deformations are induced in the composition of example 9, and in the composition of example 10, thermal deformations were induced only at 400°C. Both compositions had BYK 036 as a surfactant. The pH of the composition of example 9 stabilized on 3.1, and that of example 10 on 2.8. It may be generally stated that reducing the amount of alkyd resins in the composition allows for stability under higher temperatures, but may cause the coated layer to be more fragile. The formulations of the compositions of example 9 and 10 are given in table 5 below.

**Table 5**

| Component | Parts in example 9 | Parts in example 10 |
|---|---|---|
| Phosphoric acid (40%) | 26 | 24 |
| MgSO₄ | 1 | 1 |
| Zinc powder | 2 | 2.1 |
| NaCl | 1 | |
| Hydroxyethylcelluslose | 0.4 | 0.4 |
| Water | 44 | 43 |
| WRACLA® stabilizer | 0.9 | 0.9 |
| Zinc molybdenum orthophosphate hydrate | 6 | - |
| Zinc aluminum polyphosphate hydrate | - | 8 |
| BaSO₄ | 6 | 6 |
| SiO₂ | 17 | 21 |
| Fe₂O₃ | 15 | 15 |
| Acrylic copolymer (46-50% solids) | 46 | 40 |
| Vinyl acrylic copolymer (53-55% solids) | 46 | 40 |

### EXAMPLES FOR THE USE OF THE COMPOSITION AS A PRIMER

A primer composition was prepared according to the description in EXAMPLE 1 above and will be referred hereinafter as Killrust™.

Steel panels where Killrust™ was used as a primer were compared to similar panels where commercially available primers were used. The panels where Killrust™ was used as a primer had a rust layer of between 30 and 100 microns. They were first cleaned by seawater and then dried and coated by Killrust™. The Killrust™ was applied on rusty panels, to obtain a coating thicker than the rust layer. The other panels were first pretreated to clean them from rust in accordance with the manufacturer's instructions, typically, by washing them with solvents such as distilled water, MEK (methyl ethyl ketone), acetone etc, and then dried and coated with a commercially available primer, after they were clean of rust.

The primer composition of the present invention was tested in comparison with commercially known primers, such as Tambour Antirust, Zinchromate and Nirlat Zinchromate.

Paints that were applied over the said primer coatings were:
a. Epoxy: Ameron 400; Amercoat 300A; BASF 400; Tambour Epoxy; Nirlat Epoxy.
b. Polyurethane: Ameron 450; BASF 600; Tambour polyurethane paint and Nirlat polyurethane paint.
c. Alkyde-synthetic: Tambour Eitan; Nirlat Superemail 96.
d. Acrylic-PU: Rustoleum 5222; Nirlat Unicryl.

All tested paints applied over the primer of the invention (on rusted panels) shoved results at least as good as when applied over a commercially recommended primer (on rust-clean panels). Therefore, the primer of the invention may be termed a universal primer. Paints that adhere preferably to the primer according to the invention are those that contain only small amounts of thinners such as nitrocellulose, more preferable are paints, which do not contain any such thinners.

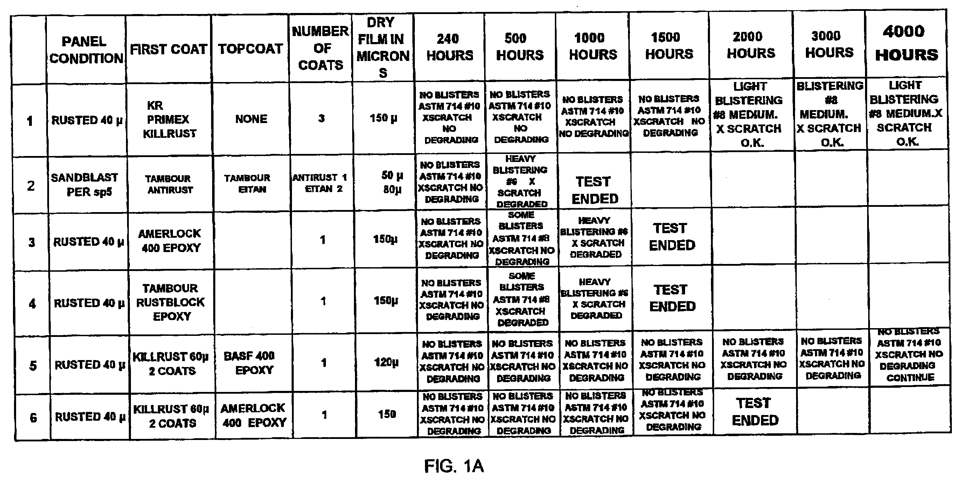

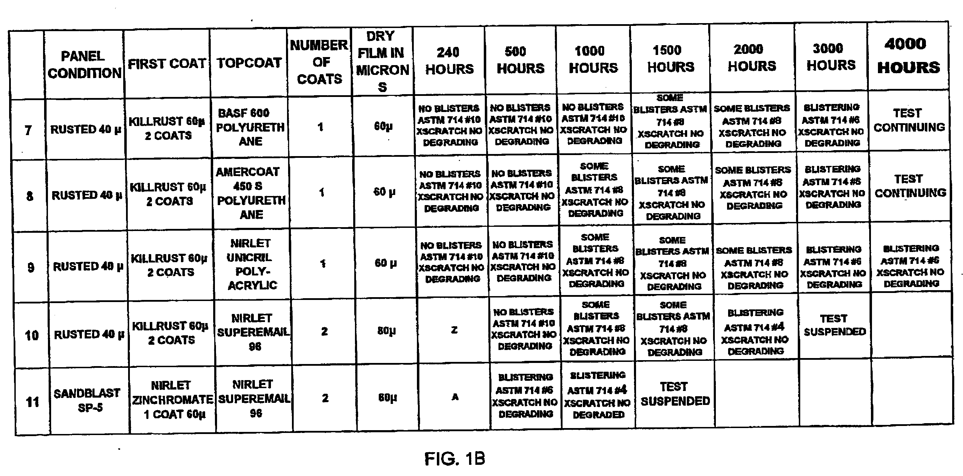

Fig. 1A and its continuation, Fig. 1B, show a table of tests results of 11 panels, tested as per ASTM B-117, D610 and D-714. The tests were carried out on steel panels prepared as per manufacturers specifications. Where so indicated panels were rusted before application of the coatings. Killrust™ is the tradename used in the figures to indicate the composition of the invention. The data appearing in the table demonstrate, *inter alia*:
◆ the variety of paints that may be painted over the primer of the invention (see panels 5 to 10);
◆ the superiority of the composition of the invention in its applicability on rusted panels (panels 1 and 3 to 10);
◆ the efficiency of the composition of the invention as both primer and paint (panel 1); and
◆ the superiority of the composition of the invention over a commercially available combination of primer and paint (panels 10 and 11).

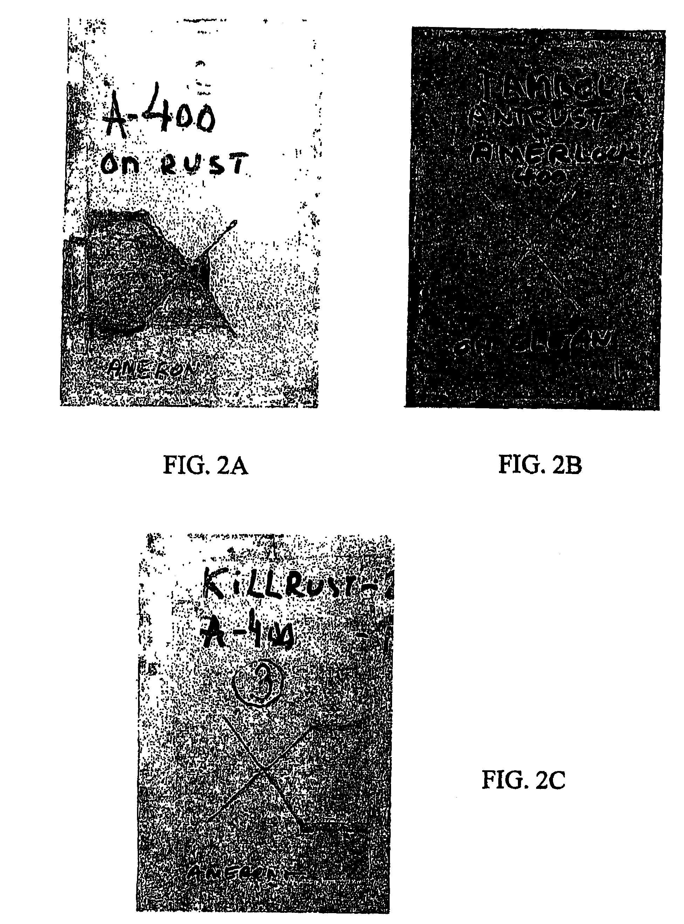

Figures 2 to 7 show photographs of some of the panels described in Figs. 1A and 1B, together with some additional panels as follows:
Figs. 2A, 2B and 2C show panels with Amerlock 400 epoxy paint, painted directly on rust (Fig. 2A, panel 3 in Fig. 1A), painted on rust-clean panel over a Tambour® antirust primer (Fig. 2B, not appearing in Fig. 1), and painted on a rusted panel over 2 layers of the primer of the invention (Fig. 2C, panel 6 in Fig. 1A). All photographs were taken after 1000 hours in a salt cabinet.

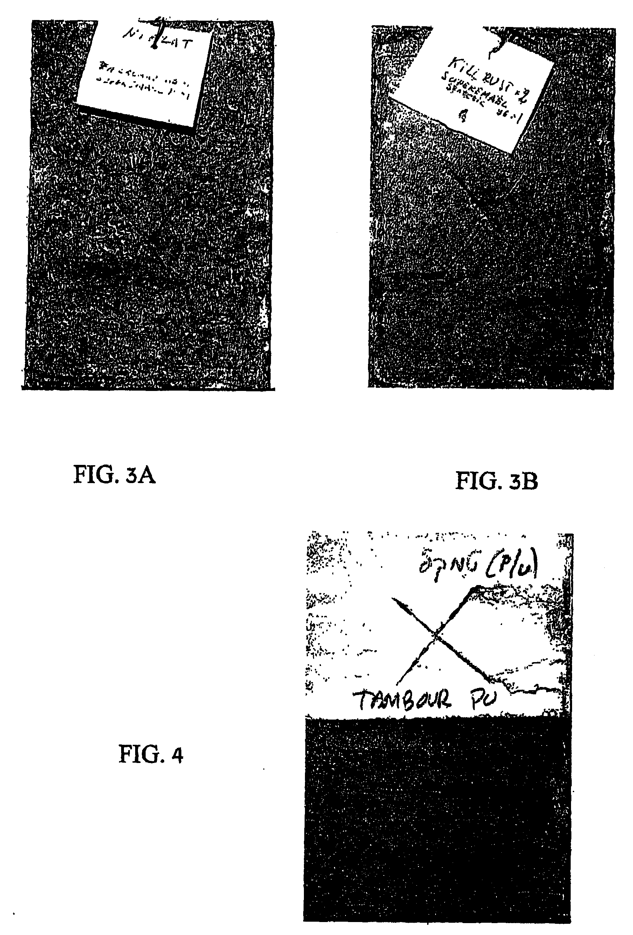

Figures 3A and 3B are photographs of panels 11 and 10, respectively, of Fig. 1B, at 1000 hours. It is clearly observed that the composition of the invention provides a better primer for the Nirlat Superemail paint than the Nirlat Zinchromate, recommended by the manufacturer, even though the composition of the invention was applied directly on a rusted surface.
Fig. 4 illustrates a steel panel treated with the composition of the invention as a primer and a polyurethane-based paint distributed by Tambour® (upper panel) and the same panel untreated (lower panel). The photograph illustrates that the primer of the invention may be safely used with polyurethane-based paints.

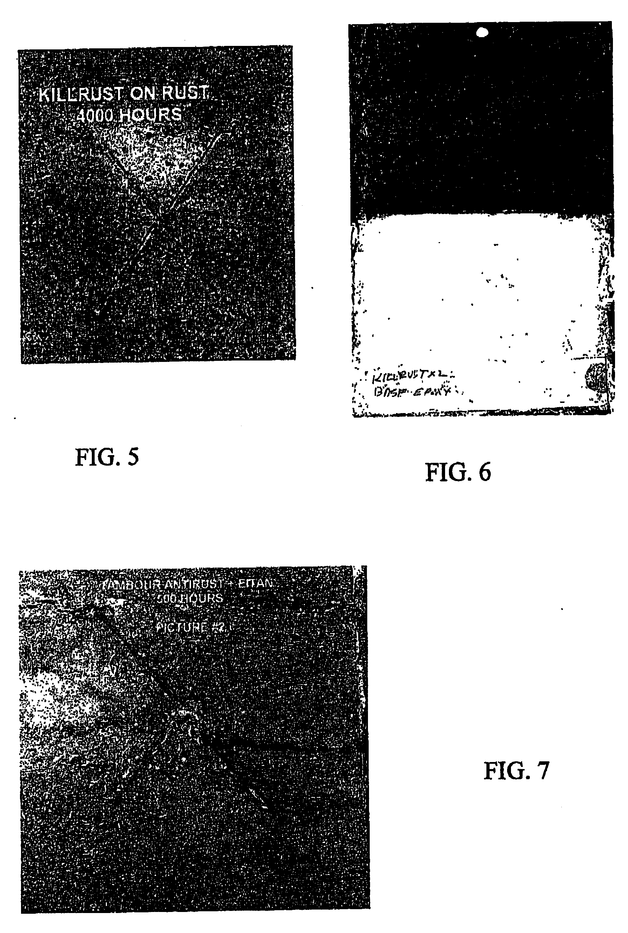

Figures 5 and 6 are panels photographed after 4000 hours in a salt cabinet. Figure 5 is a photo of a steel panel coated (when rusted) by three layers of the composition of the invention (panel 1 in Fig. 1A), and Figure 6 is a photo of a steel panel coated (when rusted) by two layers of the composition of the invention and one layer of a BASF's epoxy-based paint (panel 5 in Fig. 1A).
Figure 7 describes a panel with primer and paint not in accordance with the present invention (not mentioned in Figs. 1A and 1B), after 500 hours in a salt cabinet.

## Claims

1. An acidic, water-thinnable composition suitable for rust conversion and corrosion inhibition, comprising alkyd resins, an acid, iron oxide pigment, a stabilizer, metallic zinc or zinc-containing compound and at least one inorganic salt of an alkali or earth alkali metal.

2. A composition according to claim 1, which is applicable at temperatures below 30°C.

3. A composition according to claim 1 or 2,wherein the acid is phosphoric acid.

4. A composition according to any one of the preceding claims wherein said at least one inorganic salt is selected from chlorides, phosphates and sulfates of alkali and earth alkali metals.

5. A composition according to claim 4, wherein said at least one inorganic salt is selected from NaCl, MgCl₂, MgSO₄, and mixtures thereof.

6. A composition according to any one of the preceding claims having a minimal film forming temperature (MFFT) of 5°C or less.

7. A composition according to claim 6, having a minimal film forming temperature (MFFT) of 0°C.

8. A composition according to any one of the preceding claims, which is water based.

9. A composition according to any one of the preceding claims, which is thermally stable up to at least 250°C.

10. A composition according to claim 9, which is thermally stable up to 400°C.

11. A composition according to any one of the preceding claims, having a pH of less than 5.

12. A composition according to claim 11, having a pH between 2.5 and 3.5.

13. A composition according to any one of the preceding claims, suitable for treating rust layers of more than 20µm thickness.

14. A composition according to claim 13, suitable for treating rust layers of more than 50µm thickness.

15. A composition according to any one of the preceding claims, wherein said zinc-containing compounds include at least one of Zinc molybdenum orthophosphate hydrate and Zinc aluminum polyphosphate hydrate.

16. A composition according to any one of the preceding claims, further comprising at least one compound selected from the group consisting of additives, fillers, surfactants, thickeners and additional pigments.

17. A composition according to any one of the preceding claims, wherein the alkyd resins are water emulsions of acrylic resins, vinyl resin polymers, and mixtures thereof.

18. A composition according to claim 17, wherein the alkyd resins have solid content of 45% to 55%.

19. A composition according to any one of the preceding claims, wherein the iron oxide forms at least 2% (w/w) thereof.

20. A composition according to claim 19, wherein the iron oxide forms 7% (w/w) thereof.

21. A composition according to any one of the preceding claims, wherein the stabilizer is selected from the group consisting of propanol, propylene glycol, anhydride ions of phosphor and fluorine, and mixtures thereof.

22. A composition according to any one of claims 16 to 21, wherein the fillers are selected from the group consisting of silicon oxide, barium sulfate, and mixtures thereof.

23. A composition according to any one of claims 16 to 22, wherein the thickener is hydroxyethylcellulose.

24. A composition according to any one of claims 16 to 23, comprising 20%-60% alkyd resin, 2%-5% phosphoric acid, 10%-30% pigments, 3%-20% filters, 0.1%-1% stabilizer, 2 %-3% metallic zinc or zinc-containing compound, 0.1%-0.5% thickener, 1%-3.5% additives, all percentages w/w, and the balance water.

25. An object that is coated with a composition according to any one of the preceding claims.

26. An object according to Claim 25, further coated with a paint composition.

27. An object according to Claim 26, wherein said paint composition is selected from epoxy-based paint, polyurethane-based paint, alkyde-based paint and acrylic paint.

28. An object according to any one of claims 25 to 27, which is made of iron, cast iron, aluminum, steel, galvanized steel or galvanized iron.

29. A method for protecting an object from corrosion and converting rusty portions thereof into non-corrosive portions, the method comprising coating the object with a composition according to any one of claims 1 to 24.

30. A method for treating a rusty object before painting, the method comprising: washing the object with a suitable cleaning solution; and coating the washed object with at least one layer of a composition according to any one of Claims 1 to 24.

31. A method according to Claim 30, wherein said cleaning solution is selected from water, seawater and detergent containing water.
